# EUROPÄISCHE PATENTSCHRIFT

(11) **EP 2 151 676 B1**
(45) Veröffentlichungstag und Bekanntmachung des Hinweises auf die Patenterteilung: **28.02.2018**
(21) Anmeldenummer: 09009946.6
(22) Anmeldetag: 31.07.2009
(51) Int. Cl.: G01K 17/08, F24D 19/10

(54) **Verfahren zum Betrieb eines elektronischen Heizkostenverteilers und gemäss dem Verfahren betriebener elektronischer Heizkostenverteiler**
Method for operating an electronic heating cost distributor and electronic heating cost distributor operated according to the method
Procédé de fonctionnement d'un répartiteur électronique des coûts de chauffage et répartiteur électronique des coûts de chauffage fonctionnant selon ce procédé

(30) Priorität: 01.08.2008 DE 102008036031
(43) Veröffentlichungstag der Anmeldung: 10.02.2010
(73) Patentinhaber: METRONA WÄRMEMESSER UNION GMBH, 81379 München (DE)
(72) Erfinder: Schröder, Franz, D-82054 Sauerlach (DE); Heckmann, Dieter, D-81475 München (DE)
(74) Vertreter: Prinz & Partner mbB

(56) Entgegenhaltungen:
- DE-A1- 19 640 900
- DE-A1- 19 641 324
- DE-B3-102005 027 820

## Beschreibung

Die Erfindung betrifft ein Verfahren zum Betrieb eines elektronischen Heizkostenverteilers in einem Raum mit einem Heizkörper. Die Erfindung betrifft ferner einen gemäß dem Verfahren betriebenen elektronischer Heizkostenverteiler.

Allgemein dienen Heizkostenverteiler zur Bestimmung der Wärmeabgabe der Heizkörper, an denen die Heizkostenverteiler oder ihre Sensoren montiert sind. Neben den Heizkostenverteilern nach dem Verdunstungsprinzip, mit denen die über die Zeit integrierte Menge einer verdunsteten Flüssigkeit gemessen wird, finden elektronische Heizkostenverteiler (Heizkostenverteiler mit elektrischer Energieversorgung), mit denen die über die Zeit integrierte Übertemperatur eines Heizkörpers gemessen wird, zunehmend Verbreitung.

Die deutsche und europäische Norm DIN/EN 834 mit dem Titel "Heizkostenverteiler für die Verbrauchswerterfassung von Raumheizflächen" legt unter anderem Mindestanforderungen an die Auswertung der Anzeigewerte fest, die von elektronischen Heizkostenverteilern erzeugt werden. Im folgenden wird weitgehend die Terminologie dieser Norm verwendet und bezüglich der Definition bestimmter Begriffe auf diese Norm verwiesen.

Die Norm unterscheidet im wesentlichen zwischen zwei zulässigen Messverfahren: dem Einfühler-Messverfahren und dem Zweifühler-Messverfahren. Die Erfindung beschäftigt sich ausschließlich mit dem Betrieb von elektronischen Heizkostenverteilern, die im Normalbetrieb nach dem Zweifühler-Messverfahren arbeiten. Solche Heizkostenverteiler haben einen ersten Temperatursensor, der eine für die Heizkörperfläche (Raumheizfläche) charakteristische Temperatur (nachfolgend als Heizkörpertemperatur bezeichnet) misst, und einen zweiten Temperatursensor, der in einem bestimmten Abstand vom Heizkörper eine für die Temperatur der Raumluft (Raumtemperatur) charakteristische Temperatur misst.

Der Rückschluss von den beiden gemessenen Sensortemperaturen auf die tatsächliche Raum- bzw. Heizkörpertemperatur und die subsequente Umsetzung bei der Berechnung eines Energieflusses vom Heizkörper zur Raumluft (Wärmeverbrauch) bilden den Kern jedes spezifischen Auswerteverfahrens zur Berechnung der Anzeige- bzw. Verbrauchswerte in den elektronischen Heizkostenverteilern. Hierbei wird immer idealisiert vorausgesetzt, dass alle Mechanismen der Wärmeübertragung (sensibler Wärmeübergang, Konvektion, Strahlung) ungestört und im Sinne eines spezifikationsgemäßen Betriebs des Heizkörpers erfolgen. Problematisch können jedoch diejenigen Fälle sein, in denen eine ungestörte Wärmeabgabe nicht sichergestellt ist, der Heizkörper nicht in Betrieb ist oder - obwohl Heizbetrieb herrscht - keine Wärme vom Heizkörper an die Raumluft abgegeben wird.

Die eingangs erwähnte DIN/EN-Norm 834 schreibt für elektronische Heizkostenverteiler, die nach dem Zweifühler-Messverfahren arbeiten, vor, dass diese spätestens dann zu zählen beginnen müssen, wenn die Temperaturdifferenz zwischen Heizkörper und Raumluft 5 K (Kelvin) überschreitet. Diese Vorschrift ist erforderlich, weil es einerseits nicht erstrebenswert ist, dass der elektronische Heizkostenverteiler bei jeder kleinen Übertemperatur des Heizkörpers gegenüber der Raumluft zu zählen beginnt, andererseits aber ab höchstens 5 K Übertemperatur die Zählung einsetzen muss, damit die Wärmeabgabe des Heizkörpers mit hinreichender Genauigkeit erfasst wird.

Diese Bestimmung der Norm eröffnet jedoch auch die Möglichkeit einer Verhinderung der Zählung bei Heizbetrieb, indem der raumseitige Sensor von außen so stark erwärmt wird, dass die Zählbeginn-Übertemperatur von 5 K unterschritten wird.

Daher sieht die DIN/EN-Norm 834 für den Fall einer derartigen thermischen Beeinflussung eines elektronischen Heizkostenverteilers mit raumseitigem Temperatursensor vor, dass eine Temperaturerhöhung des elektronischen Heizkostenverteilers oder einzelner Komponenten die Anzeigegeschwindigkeit (Zählfortschritt) nicht stärker reduzieren darf, als es eine Erhöhung der Raumtemperatur von 20 °C auf 25 °C bewirkt.

Die Anforderungen der DIN/EN-Norm 834 zum Zählbeginn und zur thermischen Beeinflussung haben bei der Konstruktion elektronischer Heizkostenverteiler, die nach dem Zweifühler-Messverfahren arbeiten, ein Dilemma zur Folge. Einerseits muss das Gerät einen Heizbetrieb sicher und mit ausreichender Empfindlichkeit erfassen. Andererseits darf es, wenn nicht geheizt wird, nicht zählen; auch dann nicht, wenn sich der Heizkörper durch andere Wärmequellen im Raum, durch Sonneneinstrahlung oder durch hohe Außentemperaturen im Sommer erwärmt. Und schließlich muss verhindert werden, dass durch äußere thermische Einwirkungen - ob beabsichtigt oder nicht - die Zählung unterbunden wird, obwohl Heizbetrieb vorliegt. Das grundlegende Problem liegt darin, dass allein auf Grund der von den Sensoren zu einem bestimmten Zeitpunkt gemessenen Temperaturen nicht entschieden werden kann, welcher der denkbaren Betriebszustände gerade vorliegt.

Die DIN/EN-Norm 834 gibt keine Hinweise darauf, wie elektronische Heizkostenverteiler zu konstruieren sind. Sie legt lediglich fest, innerhalb welcher Grenzen sich die Auswirkungen zu bewegen haben, die von der Konstruktion hervorgerufen werden.

Bei einer üblichen Methode, die Anforderungen der DIN/EN 834 zu erfüllen, beginnt der Heizkostenverteiler im Normalfall zu zählen, sobald die Temperatur des Heizkörpers um 5 K höher liegt als die Temperatur der Raumluft. Steigt jedoch die gemessene Temperatur der Raumluft auf Werte über 25 °C an, so wird thermische Beeinflussung im Sinne der Norm unterstellt. Der Heizkostenverteiler beginnt dann unter allen Umständen zu zählen, unabhängig davon, ob die Temperaturdifferenz zwischen Heizkörper und Raumluft die für den Zählbeginn vorgeschriebenen 5 K erreicht oder nicht. Das Gerät berücksichtigt dann nicht mehr die gemessene Raumlufttemperatur für die Berechnung der Anzeige- oder Verbrauchswerte, sondern ersetzt diese durch eine angenommene Raumtemperatur von 20 °C.

Der Nachteil bei dieser Vorgehensweise ist, dass ab 25 °C Raumtemperatur, die schon bei vergleichsweise mäßigen Sommertemperaturen erreicht werden kann, immer eine Zählung des Heizkostenverteilers auftritt, die nicht gerechtfertigt ist, weil nicht geheizt wird. Dem kann nur entgegengewirkt werden, indem man in den Sommermonaten, also abhängig vom Datum, den Heizkostenverteiler abschaltet. Dies ist jedoch nach der DIN/EN-Norm 834 nicht zulässig, und es hätte auch den Nachteil, dass ein Heizbetrieb, der in den Sommermonaten an kühlen Tagen durchaus vorkommen kann, vom Heizkostenverteiler nicht registriert wird.

In der DE 196 41 324 A1 ist ein elektronischer Heizkostenverteiler gezeigt, der nur einen einzigen Messfühler, nämlich für die Erfassung der Heizkörpertemperatur, aufweist und nach dem Einfühler-Messverfahren arbeitet. Aus dem an diesem Messfühler abfallenden Messwert sowie durch Daten, die von einer Software vorgegeben werden und durch die chronologischen Daten des Temperaturganges am Heizkörperfühler ermittelt ein Mikrocomputer die Plausibilität des gewonnenen Messergebnisses und entscheidet darüber, ob der ermittelte Messwert zur Zählung weiterverarbeitet oder aber verworfen werden soll. Wird etwa in einem Temperaturbereich der Heizkörperfühlertemperatur zwischen zwei vorbestimmten Temperaturwerten ein übermäßiger Anstieg der Heizkörperfühlertemperatur festgestellt, dann wird ein an sich unterbundener Messvorgang des elektrischen Heizkostenverteilers unabhängig von anderen Vorgaben freigegeben. Wenn aber im selben Temperaturbereich ein Verlauf der Heizkörperfühlertemperatur mit einer geringen Steilheit festgestellt wird, bleibt ein unterbundener Messvorgang des elektrischen Heizkostenverteilers bis zum Wirksamwerden anderer Vorgaben unterbunden.

Aus der DE 196 40 900 A1 ist ein Verfahren zum Betrieb eines elektronischen Heizkostenverteilers bekannt, bei dem gemäß einem ersten Kriterium der elektronische Heizkostenverteiler im Zweifühler-Modus betrieben wird, wenn ein extrapolierter Wert der Raumluftemperatur gegenüber einem fest eingegebenen Wert unterschritten ist. Gemäß einem zweiten Kriterium wird die Zählung oder Wertung von Messergebnissen unterbunden, wenn die Differenz zwischen einer mittleren Heizmitteltemperatur und der extrapolierten Raumlufttemperatur größer als z. B. 5 K ist. Zusätzlich kann ein weiteres Kriterium vorgesehen sein, gemäß dem der Messvorgang auch dann gewertet wird, wenn die Steilheit der Änderung des Temperaturgangs der Raumlufttemperatur zwischen einem vorhergegangenen und einem nachfolgenden Messvorgang einen bestimmten Wert unterschreitet.

Ein Verfahren gemäß dem Oberbegriff des Anspruchs 1 ist aus der DE 10 2005 027 820 B3 bekannt. Bei diesem Verfahren wird die Dauer eines als Fremderwärmung erkannten Zustands in einem Hilfszähler gespeichert. Voraussetzung hierfür ist eine quasikontinuierliche Prüfung, ob ein echter Heizzustand oder ein Fremderwärmungszustand vorliegt. Ein Entscheidungskriterium bei dieser Prüfung ist der Gradient der Raumtemperatur. Ist dieser Gradient größer Null, so wird dies als ein Indiz für eine Erwärmung des Raumsensors, also für eine Erwärmungsphase gewertet.

Aufgabe der Erfindung ist es, im Falle einer thermischen Beeinflussung eines elektronischen Heizkostenverteilers eine bessere Unterscheidung zwischen möglichen Szenarien treffen zu können, die ursächlich für die thermische Beeinflussung sind.

Zur Lösung dieser Aufgabe wird ein Verfahren zum Betrieb eines elektronischen Heizkostenverteilers mit den Merkmalen des Anspruchs 1 vorgeschlagen. Vorteilhafte und zweckmäßige Ausgestaltungen des erfindungsgemäßen Verfahrens ergeben sich aus den Unteransprüchen. Gegenstand der Erfindung ist auch ein elektronischer Heizkostenverteiler gemäß Anspruch 5.

Das erfindungsgemäße Verfahren umfasst folgende Schritte:
a) Bestimmen einer Heizkörpertemperatur,
b) Bestimmen einer Raumtemperatur, und
c) Festlegen, ob ein Zählbetrieb des elektronischen Heizkostenverteilers aktiviert wird, in dem Anzeige- oder Verbrauchswerte in Abhängigkeit wenigstens der Heizkörpertemperatur berechnet werden, wobei im Schritt c) eine zeitliche Veränderung wenigstens einer der beiden bestimmten Temperaturen berücksichtigt wird.

Erfindungsgemäß wird außerdem berücksichtigt, dass in einer Situation, in der die Raumtemperatur höher als 25 °C, die Differenz zwischen der Heizkörpertemperatur und der Raumtemperatur kleiner als 5 K und die Heizkörpertemperatur über 25 °C ist, eine erste Grenztemperatur jedoch noch nicht überschritten hat, ein Zählbetrieb des elektronischen Heizkostenverteilers nicht stattfindet, dass in einer Situation, in der die Raumtemperatur höher als 25 °C sowie die Differenz zwischen der Heizkörpertemperatur und der Raumtemperatur kleiner als 5 K ist und die Heizkörpertemperatur die erste Grenztemperatur, die höher als 25 °C ist, überschreitet, ein Zählbetrieb des elektronischen Heizkostenverteilers nur dann stattfindet, wenn die zeitliche Veränderung der Heizkörpertemperatur über eine vorgegebene Anzahl aufeinanderfolgender Messungen einen Schwellenwert übersteigt, wobei das Vorzeichen der Differenz zwischen der Heizkörpertemperatur und der Raumtemperatur mitberücksichtigt wird, und dass ein Zählbetrieb des elektronischen Heizkostenverteilers stattfindet, sobald die Heizkörpertemperatur eine zweite Grenztemperatur überschreitet, die höher als die erste Grenztemperatur ist.

Die Heizkörpertemperatur und die Raumtemperatur können konkrete Messwerte von Sensoren des elektronischen Heizkostenverteilers oder aus diesen Messwerten berechnete virtuelle Temperaturen sein.

Die Erfindung beruht auf der Erkenntnis, dass die bislang übliche Praxis der punktuellen (statischen) Einzelmessungen grundsätzlich keine genauen Rückschlüsse auf die gegebenen Umstände und deren Vorgeschichte zulässt. Die erfindungsgemäß vorgesehene Berücksichtigung der zeitlichen Veränderung (Derivat) der Heizkörpertemperatur und/oder der Raumtemperatur ermöglicht hingegen eine genauere Beurteilung des real vorliegenden Szenarios. Somit kann der Betrieb des elektronischen Heizkostenverteilers entsprechend angepasst werden, um möglichst realitätsnahe Anzeige- bzw. Verbrauchswerte zu liefern.

Einer der wesentlichen Vorteile der Erfindung liegt darin, dass durch die Berücksichtigung der dynamischen Veränderungen der gemessenen Temperaturen (im Gegensatz zu der bekannten statischen Erfassung und Auswertung lediglich der augenblicklichen Temperaturen) ein Zählbetrieb des elektronischen Heizkostenverteilers durch "natürliche" Temperaturerhöhung im Sommer oder durch andere Wärmequellen im Raum vermieden werden kann und dennoch bei beabsichtigter oder manipulativer thermischer Beeinflussung durch Erwärmung des Heizkostenverteilers von außen die Zählung ausgelöst wird. Die Erfindung macht eine Abschaltung des elektronischen Heizkostenverteilers im Sommer überflüssig und ermöglicht dadurch unproblematisch eine normkonforme Konstruktion des Geräts.

Weitere Merkmale und Vorteile der Erfindung ergeben sich aus der nachfolgenden Beschreibung, die auf die beigefügte Zeichnung Bezug nimmt. In den Zeichnungen zeigen:

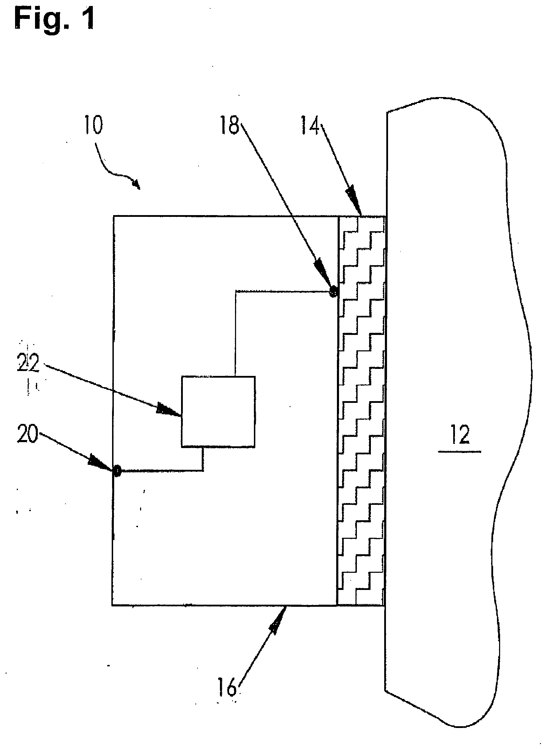

- Figur 1 schematisch den Aufbau eines elektronischen Heizkostenverteilers und dessen Anordnung an einem Heizkörper; und
- Figur 2 eine Häufigkeitsverteilung von Raumtemperaturen bei Hitzewellen im Sommer.

In der Figur ist ein elektronischer Heizkostenverteiler 10 dargestellt, der an einem Heizkörper 12, genauer gesagt an einer raumseitigen Oberfläche des Heizkörpers 12 (Raumheizfläche) angebracht ist. Der elektronische Heizkostenverteiler 10 hat ein metallisches Rückenteil 14, das wärmeleitend mit dem Heizkörper 12 verbunden ist. Auf das Rückenteil 14 ist ein Vorderteil 16 aus Kunststoff aufgesteckt, das die Elektronik beherbergt und in den Raum hineinragt. Am Rückenteil 14 ist ein erster Temperatursensor 18 angeordnet, der eine Temperatur THF misst. Ein zweiter Temperatursensor 20 ist im Vorderteil 16 angeordnet, vorzugsweise an der vom Rückenteil 14 abgewandten und dem Raum zugewandten Seite, und misst eine Temperatur TRF.

Unter normalen Umständen wird ein solcher elektronischer Heizkostenverteiler 10 im Zweifühler-Messverfahren betrieben, indem in einer Elektronik 22 des elektronischen Heizkostenverteilers 10 ein Auswertealgorithmus aus den beiden gemessenen Temperaturen THF, TRF und weiteren Parametern zunächst eine virtuelle Temperatur des Heizkörpers 12 TH bzw. eine virtuelle Temperatur der Raumluft (virtuelle Raumtemperatur) TL berechnet. Diese virtuellen Temperaturen TH, TL sollen möglichst genau der tatsächlichen Heizkörpertemperatur THreal bzw. der tatsächlichen Raumtemperatur TLreal entsprechen. Aus den beiden virtuellen Temperaturen TH, TL werden dann in bestimmten zeitlichen Abständen die Anzeige- bzw. Verbrauchswerte berechnet und angezeigt.

Unter besonderen Umständen, die später noch erläutert werden, kann der elektronische Heizkostenverteiler 10 in einen Einfühler-Betrieb wechseln. In diesem sogenannten Manipulationsmodus wird der Messwert des zweiten Temperatursensors 20 für die Bewertung des Anzeige- bzw. Verbrauchswerts ignoriert. Statt dessen wird eine konstante Raumtemperatur von 20 °C angenommen.

Grundsätzlich sind beim Betrieb eines elektronischen Heizkostenverteilers drei Fehlfunktionsszenarien denkbar, die nachfolgend kurz erläutert werden.

### Szenario A

Der Heizkörper ist nicht in Betrieb, aber der Raum wird durch andere äußere Energiequellen so stark aufgeheizt, dass sich der elektronische Heizkostenverteiler 10 und der Heizkörper 12 des Heizkörpers über 25 °C hinaus erwärmen. Dies wird im folgenden als "Fremderwärmung" bezeichnet. Es besteht ein Energiefluss von der Raumluft über den elektronischen Heizkostenverteiler 10 in den Heizkörper, so dass TLreal > TRF > THF > THreal gilt. Dieses Szenario beschreibt zum Beispiel einen Raum, der während einer Hitzeperiode im Hochsommer durch hohe Außenlufttemperaturen oder durch Strahlungseintrag stark erwärmt wird. Die von den beiden Temperatursensoren 18, 20 gemessenen Temperaturen THF und TRF führen zu realistischen Berechnungen von TH bzw. TL.

Eine Interpretation der DIN/EN-Norm 834 dahingehend, dass die Messung des zweiten Temperatursensors 20 des elektronischen Heizkostenverteilers 10 höchstens zu einer errechneten Raumtemperatur TL von 25 °C führen darf, bei darüber liegendem TL hingegen Manipulation unterstellt wird, bei der unter allen Umständen gezählt werden soll, führt in diesem Szenario dazu, dass der elektronische Heizkostenverteiler 10 trotz ausgeschaltetem Heizkörper zählt. Für diese Zählung wird der elektronische Heizkostenverteiler 10 in den Einfühler-Betrieb geschaltet, in dem die vom zweiten Temperatursensor 20 gemessene Temperatur THF durch eine konstante Referenzraumtemperatur von 20 °C ersetzt wird.

Die Folge ist, dass bei dieser Funktionsweise der elektronische Heizkostenverteiler 10 selbst an mäßig warmen Sommertagen ab (nur) 25 °C Raumtemperatur bei ausgeschaltetem Heizkörper zu zählen beginnt, und zwar sofort unter Annahme einer Temperaturdifferenz zwischen THF und TRF von mindestens 5 K. In dem geschilderten Szenario ist eine Zählung jedoch nicht realitätskonform, da der Heizkörper nicht in Betrieb ist, und sollte daher unterbleiben.

Zu berücksichtigen ist auch, dass selbst bei eingeschaltetem Heizkörper bei dieser Funktionsweise ein Überschreiten von 25 °C Raumtemperatur den unerwünschten Effekt zur Folge hätte, dass die tatsächliche Raumtemperatur nicht mehr berücksichtigt und statt dessen eine fiktive Raumtemperatur von 20 °C angenommen wird. In diesem Fall würde der Zählfortschritt sprunghaft über das richtige Maß hinaus ansteigen.

### Szenario B

Der Heizkörper ist in Betrieb, aber der elektronische Heizkostenverteiler 10 erwärmt sich auf seiner Vorderseite durch thermische Isolierung oder durch gezielte Wärmeeinwirkung derart, dass sich zwischen THF und TRF keine für den Zählbeginn ausreichende Temperaturdifferenz ausbilden kann (weniger als 5 K). Dies wird im folgenden als "Manipulation" bezeichnet. Die vom zweiten Temperatursensor 20 gemessene Temperatur TRF ist in Relation zur tatsächlichen Raumtemperatur TLreal zu hoch, so dass eine unrealistisch hohe virtuelle Raumtemperatur TL berechnet wird.

Dieses Szenario kann eintreten, wenn der Heizkörper 12 während des Heizkörperbetriebs entweder zugestellt ist (z. B. durch ein unmittelbar vor dem Heizkörper platziertes Sofa), oder wenn der elektronische Heizkostenverteiler 10 vorsätzlich von außen erwärmt oder thermisch blockiert wird mit dem Ziel, den für die Berechnung der Energieabgabe maßgeblichen Gradienten TH - TL möglichst klein zu halten. Um solchen vorsätzlichen Manipulationsversuchen vorzubeugen, verlangt die DIN/EN-Norm 834 für den Fall thermischer Beeinflussung, dass die Anzeigegeschwindigkeit nicht stärker reduziert werden darf, als es einer Erwärmung des Heizkostenverteilers von 20 °C auf 25 °C entspricht.

### Szenario C

Es besteht anfänglich ein regulärer Betrieb des Heizkörpers, der gegebenenfalls später eingestellt wird, und es kommt eine Fremderwärmungsphase hinzu, die einen Anstieg der tatsächlichen Raumtemperatur TLreal über 25 °C hinaus bewirkt. Für die Temperaturen gilt also anfänglich THF - TRF > 5 K und nach dem Einsetzen der Fremderwärmungsphase 5 K > THreal - TLreal > 0 K.

In diesem komplizierten Szenario ist es grundsätzlich möglich, dass sich der anfänglich reguläre Heizbetrieb und die später hinzukommende Fremderwärmung in ihrer zeitlichen Abfolge so vermischen, dass eine Einstufung als Manipulation erfolgt und der elektronische Heizkostenverteiler 10 im Zählbetrieb verharrt, wobei dann nicht mehr die gemessene Raumtemperatur TRF, sondern die Ersatz-Raumtemperatur von 20 °C der Berechnung der Anzeige- bzw. Verbrauchswerte zugrunde gelegt wird. In diesem Fall, der als "Heizbetrieb bei zusätzlichem äußeren Energieeintrag" zusammengefasst werden kann, ist aber ein Zählbetrieb im Manipulationsmodus (Einfühler-Messverfahren) ungerechtfertigt, weil tatsächlich hohe Raumtemperaturen vorliegen und sich die Energieabgabe des Heizkörpers dadurch real verringert. Obwohl ein Heizbetrieb bei Fremderwärmung in der Regel unbeabsichtigt ist, tritt dieses Szenario gelegentlich ein.

Um den oben geschilderten Szenarien beim Betrieb eines elektronischen Heizkostenverteilers 10 bestmöglich gerecht zu werden, sieht das erfindungsgemäße Verfahren zum Betrieb eines elektronischen Heizkostenverteilers 10 vor, dass bei der Berechnung der Energieabgabe die zeitliche Veränderung wenigstens einer der beiden bestimmten Temperaturen berücksichtigt wird, insbesondere die zeitliche Veränderung der vom ersten Temperatursensor 18 gemessenen Heizkörpertemperatur THF bzw. der daraus berechneten virtuellen Temperatur TH.

Gemäß der Erfindung wird anhand bestimmter vorgegebener Kriterien entschieden, wie der elektronische Heizkostenverteiler 10 unter den jeweiligen Umständen betrieben wird. Dies wird nachfolgend anhand vier unterschiedlicher Situationen beschrieben, die in einem beheizbaren Raum mit dem erfindungsgemäßen Verfahren messtechnisch erfasst werden können.

### 1. Situation: TH - TL ≥ 5 K

Bei einer berechneten Raumtemperatur TL ≤ 25 °C arbeitet der elektronische Heizkostenverteiler 10 im normalen Zählbetrieb nach dem Zweifühler-Messverfahren. Wenn eine Raumtemperatur TL berechnet wird, die höher als 25 °C ist, beschränkt das erfindungsgemäße Verfahren die Zählung zunächst auf diejenigen Fälle, in denen gleichzeitig das Kriterium für einen regulären Zählbetrieb, nämlich TH - TL ≥ 5 K erfüllt ist.

### 2. Situation: TL > 25 °C und TH - TL < 5 K und 25 °C < TH ≤ 25 °C + x

Bei unrealistisch hoher Raumtemperatur TL und Nichterfüllung des Kriteriums für einen regulären Zählbetrieb, d. h. TH - TL < 5 K, toleriert das erfindungsgemäße Verfahren die Erwärmung des Heizkörpers 12 bis zu einer berechneten ersten Grenztemperatur 25 °C + x und unterdrückt den Zählbetrieb. Das gilt auch, wenn die Berechnung ergibt, dass die Raumluft wärmer als der Heizkörper 12 ist, also TH - TL < 0 K. Der Parameter x ist vorzugsweise ein empirisch ermittelter Wert und kann vom Betreiber des elektronischen Heizkostenverteilers 10 eingestellt werden. (Unter dem Betreiber ist nicht der Hausbesitzer, sondern der für die Funktionsweise des elektronischen Heizkostenverteilers Verantwortliche, in der Regel der Hersteller, zu verstehen.)

### 3. Situation: TL > 25 °C und TH - TL < 5 K und 25 °C + x < TH ≤ 25 °C + z

Überschreitet die Heizkörpertemperatur TH unter ansonsten gleichen Voraussetzungen wie in der 2. Situation die erste Grenztemperatur 25 °C + x, nicht jedoch eine höhere zweite Grenztemperatur 25 °C + z, wobei z > x, wird mit dem Überschreiten der ersten Grenztemperatur 25 °C + x die Zählung ausgelöst mit einer angenommenen Raumtemperatur von 20 °C; allerdings nur dann, wenn das Derivat der Heizkörpertemperatur TH, d. h. die zeitliche Veränderung von TH über zwei oder mehrere aufeinanderfolgende Messungen, einen Schwellenwert y [K/min] übersteigt. Bleibt diese Veränderung dagegen hinreichend klein, d. h. ≤ y, so wird auf eine nicht manipulative Fremderwärmung geschlossen, und eine Zählung wird unterbunden. In diesem Kriterienblock kann auch zusätzlich das Vorzeichen des Gradienten TH - TL mitberücksichtigt werden, insbesondere um Rechenleistung einzusparen. Die Parameter y und z sind wiederum vorzugsweise empirisch ermittelte Werte und können vom Betreiber des elektronischen Heizkostenverteilers 10 eingestellt werden.

### 4. Situation: TH - TL < 5 K und 25 °C + z < TH

Erst bei Überschreiten der zweiten Grenztemperatur 25 °C + z entfällt schließlich die Berücksichtigung des Temperaturderivats, und die Zählung läuft zwingend an mit einer angenommenen Raumtemperatur von 20 °C.

Bei Abkühlung des Heizkörpers stellt das erfindungsgemäße Verfahren sicher, dass der Zählbetrieb spätestens beim Zurückfallen der Heizkörpertemperatur auf 25 °C + x wieder eingestellt wird.

Durch entsprechende Auswahl der ersten und zweiten Grenztemperatur 25 °C + x bzw. 25 °C + z sowie des Derivats y der Heizkörpertemperatur TH können langjährige Erfahrungswerte berücksichtigt werden, die insbesondere auf der statistischen Auswertung vieler während der regulären Ablesungen von elektronischen Heizkostenverteilern vorgenommenen Temperaturmessungen in Wohnräumen während der Sommer- und Wintermonate beruhen, ebenso wie auf experimentellen Erfahrungswerten mit dem Erwärmungs- und Abkühlungsverhalten einer Vielzahl von Heizkörpertypen.

Die Parameter x und z können zudem unterschiedlich für verschiedene Heizkostenverteiler gewählt werden, je nachdem, ob der jeweilige elektronische Heizkostenverteiler mit Produktbewertung oder mit Einheitsbewertung betrieben wird. Im Falle einer Produktbewertung sind sowohl die Gewichtung der Größe des Heizkörpers, die sog. "Bewertung" (eine alleinige Eigenschaft des Heizkörpers) als auch die wirksame thermische Ankopplung des elektronischen Heizkostenverteilers an die Raumheizfläche, die sog. "C-Werte" (eine gemeinsame Eigenschaft der Paarung Heizkörper-Heizkostenverteiler) im Gerät fest einprogrammiert, so dass die Zählfortschrittsanzeige in fest determiniertem Verhältnis zur relativen Energieabgabe steht. Im Falle einer Einheitsbewertung kennt das Gerät die tatsächlichen C-Werte und die Bewertung noch nicht und rechnet mit repräsentativen, fixen C-Werten und einer Bewertung von 100 %. Der Zählfortschritt wird dann nachträglich bei der Abrechnung im Rechenzentrum des Betreibers ermittelt.

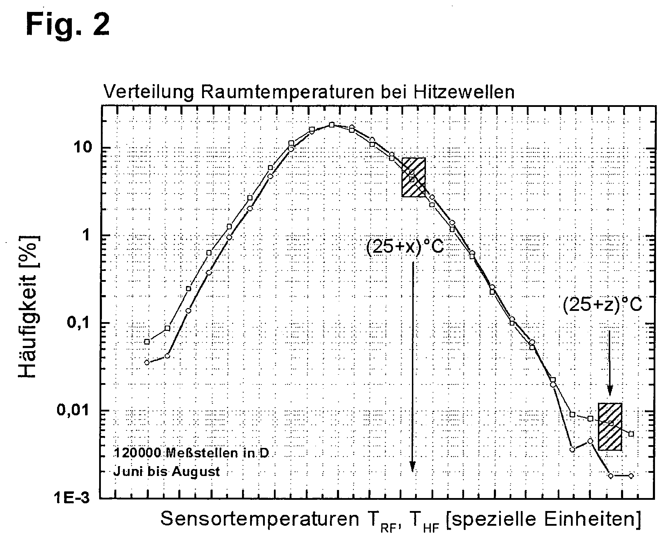

Figur 2 zeigt eine Häufigkeitsverteilung von Raumtemperaturen bei Hitzewellen im Sommer, abgeleitet von raumseitigen Temperatursensoren (Kreise) und heizkörperseitigen Temperatursensoren (Quadrate). Die Arbeitsparameter des Verfahrens können z. B. so gewählt werden, dass in weniger als 5 % der Fälle Temperaturen über 25 °C + x, in weniger als 0,01 % der Fälle Temperaturen über 25 °C + z auftreten.

## Patentansprüche

1. Verfahren zum Betrieb eines elektronischen Heizkostenverteilers in einem Raum mit einem Heizkörper, mit folgenden Schritten:
a) Bestimmen einer Heizkörpertemperatur,
b) Bestimmen einer Raumtemperatur, und
c) Festlegen, ob ein Zählbetrieb des elektronischen Heizkostenverteilers aktiviert wird, in dem Anzeige- oder Verbrauchswerte in Abhängigkeit wenigstens der Heizkörpertemperatur berechnet werden,
wobei im Schritt c) eine zeitliche Veränderung wenigstens einer der beiden bestimmten Temperaturen berücksichtigt wird,
**dadurch gekennzeichnet, dass** in einer Situation, in der die Raumtemperatur höher als 25 °C, die Differenz zwischen der Heizkörpertemperatur und der Raumtemperatur kleiner als 5 K und die Heizkörpertemperatur über 25 °C ist, eine erste Grenztemperatur jedoch noch nicht überschritten hat, ein Zählbetrieb des elektronischen Heizkostenverteilers nicht stattfindet,
dass in einer Situation, in der die Raumtemperatur höher als 25 °C sowie die Differenz zwischen der Heizkörpertemperatur und der Raumtemperatur kleiner als 5 K ist und die Heizkörpertemperatur die erste Grenztemperatur, die höher als 25 °C ist, überschreitet, ein Zählbetrieb des elektronischen Heizkostenverteilers nur dann stattfindet, wenn die zeitliche Veränderung der Heizkörpertemperatur über eine vorgegebene Anzahl aufeinanderfolgender Messungen einen Schwellenwert übersteigt, wobei das Vorzeichen der Differenz zwischen der Heizkörpertemperatur und der Raumtemperatur mitberücksichtigt wird, und
dass ein Zählbetrieb des elektronischen Heizkostenverteilers stattfindet, sobald die Heizkörpertemperatur eine zweite Grenztemperatur überschreitet, die höher als die erste Grenztemperatur ist.

2. Elektronischer Heizkostenverteiler, **gekennzeichnet durch** Einrichtungen zum Bestimmen einer Heizkörpertemperatur und zum Bestimmen einer Raumtemperatur sowie einer Einrichtung zum Festlegen, ob ein Zählbetrieb des elektronischen Heizkostenverteilers aktiviert wird, in dem Anzeige- oder Verbrauchswerte in Abhängigkeit wenigstens der Heizkörpertemperatur berechnet werden unter Berücksichtigung einer zeitlichen Veränderung wenigstens einer der beiden bestimmten Temperaturen, wobei die Einrichtung zum Festlegen, ob ein Zählbetrieb des elektronischen Heizkostenverteilers aktiviert wird, so eingerichtet ist, dass in einer Situation, in der die Raumtemperatur höher als 25 °C, die Differenz zwischen der Heizkörpertemperatur und der Raumtemperatur kleiner als 5 K und die Heizkörpertemperatur über 25 °C ist, eine erste Grenztemperatur jedoch noch nicht überschritten hat, ein Zählbetrieb des elektronischen Heizkostenverteilers nicht stattfindet, dass in einer Situation, in der die Raumtemperatur höher als 25 °C sowie die Differenz zwischen der Heizkörpertemperatur und der Raumtemperatur kleiner als 5 K ist und die Heizkörpertemperatur die erste Grenztemperatur, die höher als 25 °C ist, überschreitet, ein Zählbetrieb des elektronischen Heizkostenverteilers nur dann stattfindet, wenn die zeitliche Veränderung der Heizkörpertemperatur über eine vorgegebene Anzahl aufeinanderfolgender Messungen einen Schwellenwert übersteigt, wobei das Vorzeichen der Differenz zwischen der Heizkörpertemperatur und der Raumtemperatur mitberücksichtigt wird, und dass ein Zählbetrieb des elektronischen Heizkostenverteilers stattfindet, sobald die Heizkörpertemperatur eine zweite Grenztemperatur überschreitet, die höher als die erste Grenztemperatur ist.

## Claims

1. A method for operating an electronic heating cost distributor in a room with a radiator, comprising the following steps:
a) determining a radiator temperature,
b) determining a room temperature, and
c) defining whether a counting operation of the electronic heating cost distributor is activated, in which the display or consumption values are calculated in dependence at least on the radiator temperature,
wherein in step c) a temporal change of at least one of the two determined temperatures is taken into account,
**characterized in that** in a situation in which the room temperature is higher than 25 °C, the difference between the radiator temperature and the room temperature is less than 5 K and the radiator temperature is above 25 °C, but has not yet exceeded a first limit temperature, a counting operation of the electronic heating cost distributor does not take place,
that in a situation in which the room temperature is higher than 25 °C and the difference between the radiator temperature and the room temperature is less than 5 K and the radiator temperature exceeds the first limit temperature, which is higher than 25 °C, a counting operation of the electronic heating cost distributor only takes place when the temporal change of the radiator temperature exceeds a threshold value throughout a specified number of successive measurements, wherein the sign of the difference between the radiator temperature and the room temperature also is taken into account, and
that a counting operation of the electronic heating cost distributor takes place as soon as the radiator temperature exceeds a second limit temperature which is higher than the first limit temperature.

2. An electronic heating cost distributor, **characterized by** devices for determining a radiator temperature and for determining a room temperature as well as a device for defining whether a counting operation of the electronic heating cost distributor is activated, in which display or consumption values are calculated in dependence at least on the radiator temperature by taking account of a temporal change of at least one of the two determined temperatures, wherein the device for defining whether a counting operation of the electronic heating cost distributor is activated is equipped such that in a situation in which the room temperature is higher than 25 °C, the difference between the radiator temperature and the room temperature is less than 5 K and the radiator temperature is above 25 °C, but has not yet exceeded a first limit temperature, a counting operation of the electronic heating cost distributor does not take place, that in a situation in which the room temperature is higher than 25 °C and the difference between the radiator temperature and the room temperature is less than 5 K and the radiator temperature exceeds the first limit temperature, which is higher than 25 °C, a counting operation of the electronic heating cost distributor only takes place when the temporal change of the radiator temperature exceeds a threshold value throughout a specified number of successive measurements, wherein the sign of the difference between the radiator temperature and the room temperature also is taken into account, and that a counting operation of the electronic heating cost distributor takes place as soon as the radiator temperature exceeds a second limit temperature which is higher than the first limit temperature.

## Revendications

1. Procédé de mise en oeuvre d'un répartiteur de frais de chauffage électronique dans une pièce qui comporte un radiateur, comprenant les étapes suivantes :
a) la détermination d'une température de radiateur,
b) la détermination d'une température ambiante, et
c) la spécification si une opération de comptage du répartiteur de frais de chauffage électronique est activée, dans laquelle des valeurs d'affichage ou de consommation sont calculées au moins en fonction de la température de radiateur, un changement dans le temps d'au moins l'une des deux températures déterminées étant pris en compte à l'étape c),
**caractérisé en ce que** dans une situation dans laquelle la température ambiante est supérieure à 25°C, la différence entre la température de radiateur et la température ambiante est inférieure à 5 K, et la température de radiateur est supérieure à 25°C mais n'a pas encore dépassé une première température limite, une opération de comptage du répartiteur de frais de chauffage électronique n'a pas lieu,
**en ce que** dans une situation dans laquelle la température ambiante est supérieure à 25°C et la différence entre la température de radiateur et la température ambiante est inférieure à 5 K, et la température de radiateur dépasse la première température limite qui est supérieure à 25°C, une opération de comptage du répartiteur de frais de chauffage électronique a lieu uniquement lorsque le changement dans le temps de la température de radiateur est supérieur à une valeur seuil sur un nombre déterminé de mesures successives, le signe de la différence entre la température de radiateur et la température ambiante étant également pris en compte, et
**en ce qu'**une opération de comptage du répartiteur de frais de chauffage électronique a lieu dès que la température de radiateur dépasse une deuxième température limite qui est supérieure à la première température limite.

2. Répartiteur de frais de chauffage électronique, **caractérisé par** des moyens pour la détermination d'une température de radiateur et la détermination d'une température ambiante, et un moyen pour la spécification si une opération de comptage du répartiteur de frais de chauffage électronique est activée, dans laquelle des valeurs d'affichage ou de consommation sont calculées au moins en fonction de la température de radiateur en tenant compte d'un changement dans le temps d'au moins l'une des deux températures déterminées, le moyen pour la spécification si une opération de comptage du répartiteur de frais de chauffage électronique est activée étant aménagé de manière à ce que dans une situation dans laquelle la température ambiante est supérieure à 25°C, la différence entre la température de radiateur et la température ambiante est inférieure à 5 K, et la température de radiateur est supérieure à 25°C mais n'a pas encore dépassé une première température limite, une opération de comptage du répartiteur de frais de chauffage électronique n'a pas lieu, à ce que dans une situation dans laquelle la température ambiante est supérieure à 25°C et la différence entre la température de radiateur et la température ambiante est inférieure à 5 K, et la température de radiateur dépasse la première température limite qui est supérieure à 25°C, une opération de comptage du répartiteur de frais de chauffage électronique a lieu uniquement lorsque le changement dans le temps de la température de radiateur est supérieur à une valeur seuil sur un nombre déterminé de mesures successives, le signe de la différence entre la température de radiateur et la température ambiante étant également pris en compte, et à ce qu'une opération de comptage du répartiteur de frais de chauffage électronique a lieu dès que la température de radiateur dépasse une deuxième température limite qui est supérieure à la première température limite.
